# EUROPEAN PATENT APPLICATION

(11) **EP 4 764 672 A1**
(43) Date of publication of application: **24.06.2026**
(21) Application number: 24221958.2
(22) Date of filing: 19.12.2024
(51) Int. Cl.: G02C 7/04

(54) **OXYGEN PERMEABLE CONTACT LENS**

(71) Applicant: YONG DA LI TECHNOLOGY CO., LTD., Taichung City (TW)
(72) Inventor: WANG, CHIANG-CHUAN, 50648 CHANGHUA COUNTY (TW)
(74) Representative: Lang, Christian

(57) **Abstract**

An oxygen permeable contact lens is provided. The oxygen permeable contact lens has a convex arcuate outer lens surface and a concave arcuate inner lens surface on the reverse side of the outer lens surface. The contact lens is provided with at least one oxygen permeable hole which is drilled by a laser linearly penetrating the outer lens surface and the inner lens surface, thereby increasing the air permeability and oxygen permeability of the contact lens by means of the oxygen permeable hole. When wearing the contact lenses, the eyeballs can be supplied with oxygen through the oxygen permeable hole in time and the circulation of tears and moisture can be enhanced, alleviating eye dryness, stabbing pains, and other discomforts and thereby improving the wearing comfort of the contact lens. Thus, a reduction of infection risks for the eyes can be achieved, ensuring a wearing safety. When using eye drops or artificial tears, the moistening effect of the eyeballs can be achieved through the oxygen permeable hole, and the convenience of soothing the eyeballs is also achieved.

## Description

### BACKGROUND OF INVENTION

### 1. Field of Invention

The present invention relates to a contact lens, in particular an oxygen permeable contact lens having at least one laser-drilled oxygen permeable hole with a hole diameter in millimeter.

### 2. Description of the Related Art

Conventional contact lenses are susceptible to problems such as poor air permeability, poor oxygen permeability, and lack of hydrophilicity, which affects the self-lubricating mechanism of the eyes, leading to eye dryness, burning sensations, fatigue and other discomforts. The cornea has no blood vessels for oxygen supply, so that the health of the eyes relies on oxygen in the air. If the contact lenses we wear have poor oxygen permeability, the contact lenses will prevent oxygen from reaching our eyes, increasing the risk of eyeball infection with bacterial keratitis. In severe cases, it can lead to corneal hypoxia, thus causing red eyes, blurred vision, and even corneal damage and other problems.

### SUMMARY OF THE INVENTION

An objective of present invention is to provide an oxygen permeable contact lens with which the problems described in the description of the related art can be solved.

To achieve these and other objects of the present invention, an oxygen permeable contact lens is provided. The oxygen permeable contact lens comprises a contact lens which has a convex arcuate outer lens surface and a concave arcuate inner lens surface on the reverse side of the outer lens surface. The contact lens is provided with at least one oxygen permeable hole which is drilled by a laser linearly penetrating the outer lens surface and the inner lens surface, thereby increasing the air permeability and oxygen permeability of the contact lens by means of the oxygen permeable hole, thus improving the wearing comfort of the contact lens.

Preferably, the hole diameter of the oxygen permeable hole is between 0.1 ~ 0.01 mm.

Preferably, the contact lens is provided with a plurality of oxygen permeable holes penetrating the outer lens surface and the inner lens surface.

Preferably, the contact lens comprises an optical area, a non-optical area, and a rim and the oxygen permeable holes are formed at least in the non-optical area.

Preferably, the oxygen permeable holes are formed in the optical area and the non-optical area at an equal distance.

The oxygen permeable contact lens according to the invention has following advantages. At least one oxygen permeable hole is drilled by a laser linearly penetrating the outer lens surface and the inner lens surface. In this way, the forming operation of the oxygen permeable hole at the contact lens can be completed in a very short time, avoiding processing of multiple layers in multiple work steps and thus improving the yield. Moreover, the hole diameter of the oxygen permeable hole is so small and the cut edge of the oxygen permeable hole is so flat that the oxygen permeable hole is scarcely perceptible and will therefore not cause invasive discomforts to the eyeballs. Thus, the user can wear the contact lens by himself, enhancing the commercial application of the contact lens.

Furthermore, the oxygen permeable hole that penetrates the outer lens surface and the inner lens surface linearly increases the oxygen permeability of the contact lens significantly so that the eyeballs can be supplied with oxygen through the oxygen permeable hole in time and the circulation of tears and moisture can be enhanced, alleviating eye dryness, stabbing pains, and other discomforts and thereby improving the wearing comfort of the contact lens. Thus, a reduction of infection risks for the eyes can be achieved, ensuring a wearing safety. When using eye drops or artificial tears, the moistening effect of the eyeballs can be achieved through the oxygen permeable hole, and the convenience of soothing the eyeballs is also achieved.

Other objects, advantages, and novel features of invention will become more apparent from the following detailed description when taken in conjunction with the accompanying drawings.

### BRIEF DESCRIPTION of DRAWINGS

FIG. 1 is a perspective view of a first preferred embodiment of an oxygen permeable contact lens according to the present invention.
FIG. 2 is a planar view of the permeable contact lens shown in Fig. 1 and an enlarged and sectional view of a cutout.
FIG. 3 shows schematically a forming process of the permeable contact lens shown in Fig. 1.
FIG. 4 shows schematically a drilling process by a laser to form oxygen permeable holes according to the invention.
FIG. 5 shows schematically a second preferred embodiment of an oxygen permeable contact lens according to the present invention.
FIG. 6 shows schematically the state of air permeation of a worn contact lens according to the invention.
FIG. 7 shows schematically the usage of eye drops or artificial tears for the oxygen permeable contact lens according to the invention.

### DETAILED DESCRIPTION OF THE PREFERRED EMBODIMENT

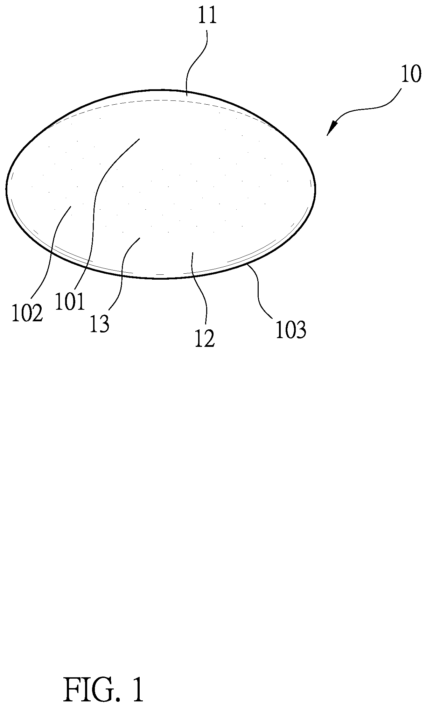

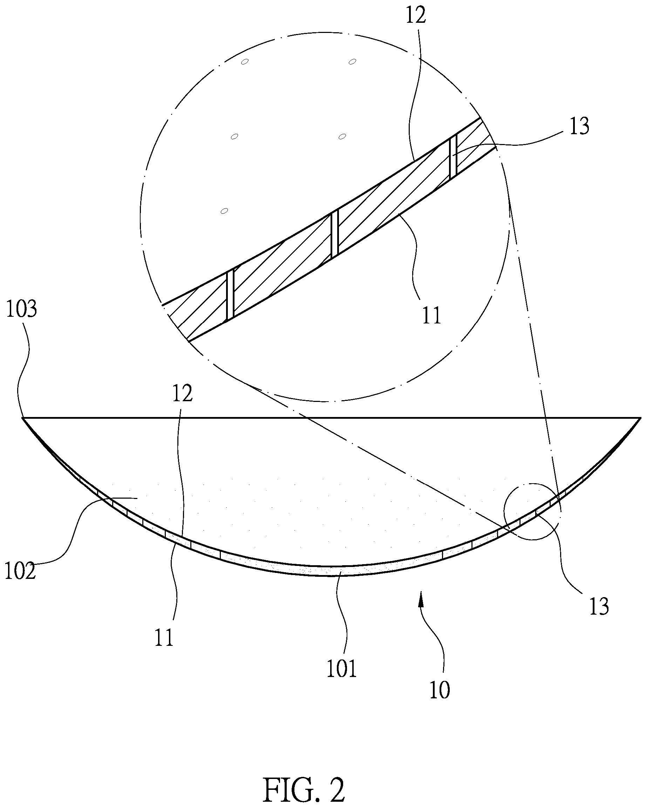

Please refer to FIG. 1 to FIG. 2, an oxygen permeable contact lens 10 is provided. The oxygen permeable contact lens comprises a contact lens 10 which has a convex arcuate outer lens surface 11 and a concave arcuate inner lens surface 12 on the reverse side of the outer lens surface 11. The contact lens 10 is provided with at least one oxygen permeable hole 13 which is drilled by a laser linearly penetrating the outer lens surface 11 and the inner lens surface 12. The hole diameter of the oxygen permeable hole 13 is between 0.1 ~0.01 mm. The oxygen permeable hole 13 increases the air permeability and oxygen permeability of the contact lens 10, thus improving the wearing comfort of the contact lens.

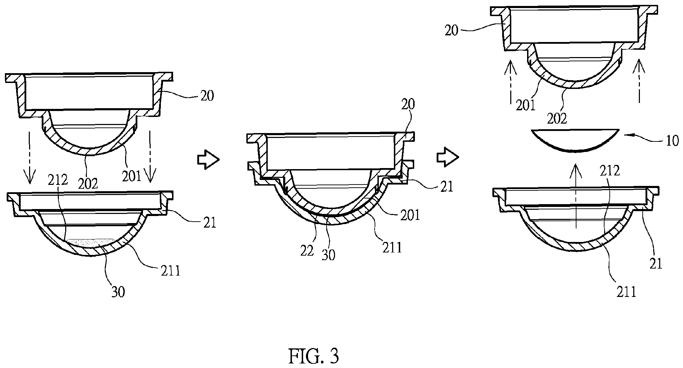

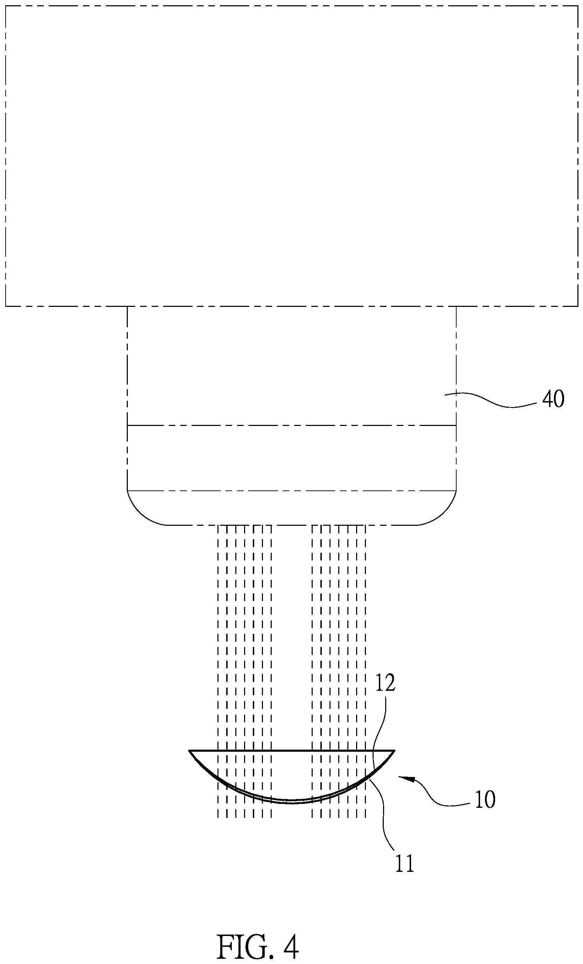

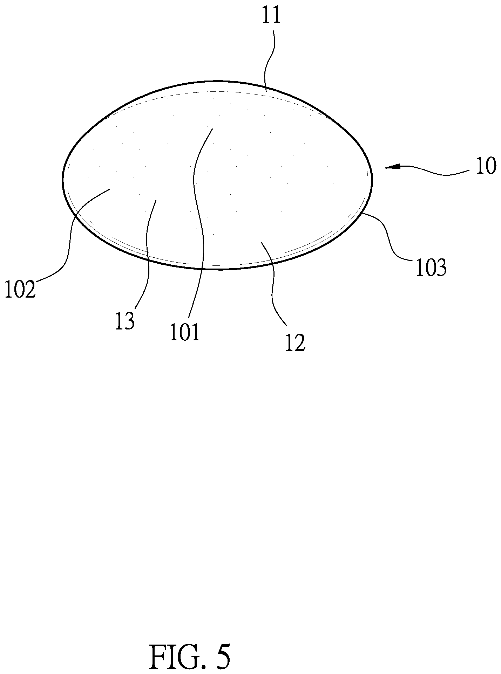

As shown in FIG. 3 and FIG. 4, the contact lens 10 is cured in a mould consisting of an upper mould 20 and a lower mould 21. The upper mould 20 has a first cup 201 on whose external wall a convex arcuate surface 202 is formed. The lower mould 21 has a second cup 211 on whose interior wall a concave arcuate surface 212 is formed. When the upper mould 20 and the lower mould 21 are assembled, a forming chamber 22 is formed by the first cup 201 and the second cup 211. Following this, a polymeric material 30 is poured in the forming chamber 22 and then cured with heating or light. The cured contact lens 10 will then be removed from the mould. The contact lens 10 comprises an optical area 101, a non-optical area 102, and a rim 103. Subsequently, at least one oxygen permeable hole 13 is drilled at the contact lens 10 by a laser penetrating the outer lens surface 11 and the inner lens surface 12 with a laser equipment 40. As shown in FIG. 1, a plurality of oxygen permeable holes 13 is arranged at the contact lens 10 in such a way that they penetrate the outer lens surface 11 and the inner lens surface 12. The oxygen permeable holes 13 are formed at least in the non-optical area 102. As in FIG. 5 shown, it is also possible to arrange the oxygen permeable holes 13 both in the optical area 101 and the non-optical area 102 at an equal distance.

The oxygen permeable contact lens 10 according to the invention has following advantages. At least one oxygen permeable hole 13 is drilled by a laser linearly penetrating the outer lens surface 11 and the inner lens surface 12. In this way, the forming operation of the oxygen permeable hole 13 at the contact lens 10 can be completed in a very short time, avoiding processing of multiple layers in multiple work steps and thus improving the yield. Moreover, the hole diameter of the oxygen permeable hole 13 is so small and the cut edge of the oxygen permeable hole 13 is so flat that the oxygen permeable hole 13 is scarcely perceptible and will therefore not cause invasive discomforts to the eyeballs. Thus, the user can wear the contact lens 10 by himself, enhancing the commercial application of the contact lens 10.

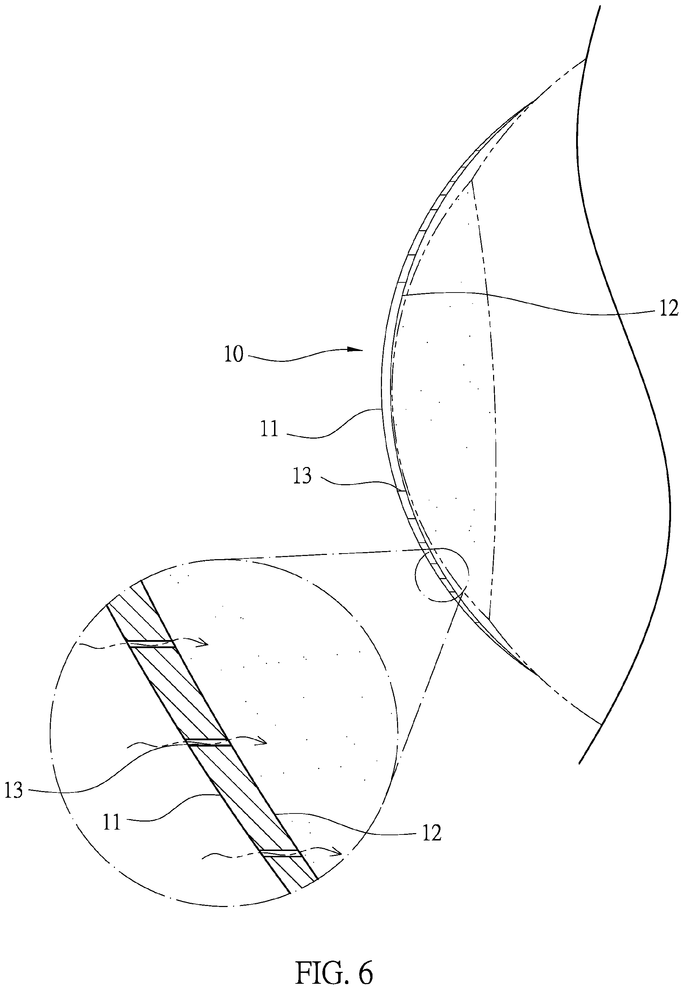

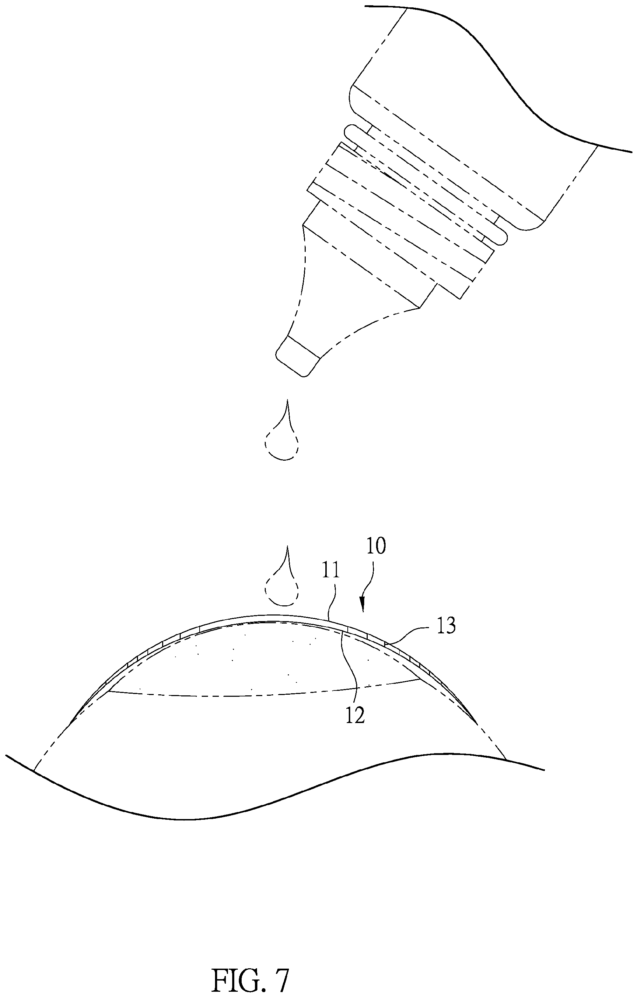

Furthermore, the oxygen permeable hole 13 that penetrates the outer lens surface 11 and the inner lens surface 12 linearly increases the oxygen permeability of the contact lens 10 significantly so that the eyeballs can be supplied with oxygen through the oxygen permeable hole 13 in time (see FIG. 6) and the circulation of tears and moisture can be enhanced, alleviating eye dryness, stabbing pains, and other discomforts and thereby improving the wearing comfort of the contact lens 10. Thus, a reduction of infection risks for the eyes can be achieved, ensuring a wearing safety. When using eye drops or artificial tears, the moistening effect of the eyeballs can be achieved through the oxygen permeable hole 13 (see FIG. 7), and the convenience of soothing the eyeballs is also achieved.

Although the present invention has been explained in relation to its preferred embodiment, it is to be understood that many other possible modifications and variations can be made without departing from the spirit and scope of invention as hereinafter claimed.

## Claims

1. An oxygen permeable contact lens, comprising a contact lens having a convex arcuate outer lens surface and a concave arcuate inner lens surface on the reverse side of the outer lens surface. The contact lens is provided with at least one oxygen permeable hole which is drilled by a laser linearly penetrating the outer lens surface and the inner lens surface, thereby increasing the air permeability and oxygen permeability of the contact lens by means of the oxygen permeable hole, thus improving the wearing comfort of the contact lens.

2. The oxygen permeable contact lens as claimed in claim 1, wherein the hole diameter of the oxygen permeable hole is between 0.1 ~0.01 mm.

3. The oxygen permeable contact lens as claimed in claim 1, wherein the contact lens is provided with a plurality of oxygen permeable holes penetrating the outer lens surface and the inner lens surface.

4. The oxygen permeable contact lens as claimed in claim 3, wherein the contact lens comprises an optical area, a non-optical area, and a rim and the oxygen permeable holes are formed at least in the non-optical area.

5. The oxygen permeable contact lens as claimed in claim 4, wherein the oxygen permeable holes are formed in the optical area and the non-optical area at an equal distance.

## Amended claims

### Amended claims in accordance with Rule 137(2) EPC.

1. An oxygen permeable contact lens, comprising a contact lens (10) having a convex arcuate outer lens surface (11) and a concave arcuate inner lens surface (12) on the reverse side of the outer lens surface (11), wherein the contact lens (10) is provided with at least one oxygen permeable hole (13);
wherein the contact lens (10) is formed by curing in a mould consisting of an upper mould (20) and a lower mould (21), the upper mould (20) having a first cup (201) on whose external wall a convex arcuate surface (202) is formed, the lower mould (21) having a second cup (211) on whose interior wall a concave arcuate surface (212) is formed, wherein, when the upper mould (20) and the lower mould (21) are assembled, a forming chamber (22) is formed by the first cup (201) and the second cup (211), and wherein, following this, a polymeric material (30) is poured in the forming chamber (22) and then cured with heating or light, thereby, the cured polymeric material (30) forms the contact lens (10);
**characterized in that**
after removal of the cured contact lens (10) from the mould, the at least one oxygen permeable hole (13) is drilled at the contact lens (10) by a laser linearly penetrating the outer lens surface (11) and the inner lens surface (12), thereby increasing the air permeability and oxygen permeability of the contact lens (10) by means of the oxygen permeable hole (13), thus improving the wearing comfort of the contact lens.

2. The oxygen permeable contact lens as claimed in claim 1, wherein the hole diameter of the oxygen permeable hole (13) is between 0.1 ~0.01 mm.

3. The oxygen permeable contact lens as claimed in claim 1, wherein the contact lens (10) is provided with a plurality of oxygen permeable holes (13) penetrating the outer lens surface (11) and the inner lens surface (12).

4. The oxygen permeable contact lens as claimed in claim 3, wherein the contact lens (10) comprises an optical area (101), a non-optical area (102), and a rim (103) and the oxygen permeable holes (13) are formed at least in the non-optical area (102).

5. The oxygen permeable contact lens as claimed in claim 4, wherein the oxygen permeable holes (13) are formed in the optical area (101) and the non-optical area (102) at an equal distance.
